**Europäisches Patentamt**

**European Patent Office**

**Office européen des brevets**

(11) Veröffentlichungsnummer: **0 331 053**
**A2**

(12) # EUROPÄISCHE PATENTANMELDUNG

(21) Anmeldenummer: 89103327.6

(51) Int. Cl.⁴: **B23B 39/20**

(22) Anmeldetag: 24.02.89

(30) Priorität: 02.03.88 DE 3806769

(43) Veröffentlichungstag der Anmeldung:
06.09.89 Patentblatt 89/36

(84) Benannte Vertragsstaaten:
ES FR IT

(71) Anmelder: EMAG MASCHINENFABRIK GMBH
Austrasse 24
D-7335 Salach/Württemberg(DE)

(72) Erfinder: Brüntrup, Otto
Tizianstrasse 73
DE-8000 München 19(DE)

(74) Vertreter: Zmyj, Erwin, Dipl.-Ing.
Rosenheimer Strasse 52
D-8000 München 80(DE)

(54) **Revolverkopf mit angetriebenem Werkzeug.**

(57) Der Revolverkopf (1) weist eine drehbar gelagerte Revolverscheibe (3) und eine innerhalb dieser Revolverscheibe sowohl drehbar als auch schwenkbar gelagerte Spindel (5) auf. Die Spindel (5) ist innerhalb der Revolverscheibe mit Zahnkranzsegmenten (14) versehen, die symmetrisch zur Spindelachse liegen un über Planetenritzel (15) mit Zahnkränzen (16) in Verbindung stehen, die untereinander mittels einer Ritzelwelle starr gekoppelt und in der Revolverscheibe (3) drehbar gelagert sind. Diese symmetrisch Anordnung von Zahnkranzsegmenten, Planetenritzeln und Zahnkränzen ist vorgesehen, um eine einseitige Krafteinwirkung auf die Spindel und damit Taumelbewegungen derselben zu verhindern. Mittels eines Indexbolzens (17) kann der Zahnkranz (16) gegenüber dem Revolvergehäuse (2) blockiert werden, so daß bei einer Verdrehung der Revolverscheibe (3) sich die Planetenritzel (15) abwälzen und dabei aufgrund ihres Eingriffes in die Zahnsegmente (14) die Spindel (5) verschwenken, so daß diese bei einer Verschwenkung der Revolverscheibe parallel zu sich selbst verschoben wird. Die dabei auftretende Axial-Verlagerung des von der Spindel gehaltenen Werkzeuges (11) wird durch eine Verschiebung des den Revolverkopf tragenden Schlittens ausgeglichen.

Fig.1

## Revolverkopf mit angetriebenem Werkzeug

Die Erfindung bezieht sich auf einen Revolverkopf mit einer angetriebenen ein Werkzeug aufnehmenden Spindel, der in verschiedene Werkzeugstationen um eine zentrale Achse mittels eines Antriebsmotors schwenkbar und in diesen Werkzeugstationen feststellbar ist, sowie mit einem ihn tragenden verschiebbaren Schlitten, der eine Zustellung des angetriebenen Werkzeuges in Richtung der Achse der das Werkzeug aufnehmenden Spindel ermöglicht.

Revolverköpfe dieser Art (EP 0 158 182) weisen einen Antriebsmotor zum Antrieb des Werkzeuges, z. B. eines Bohrers oder eines Fräsers, auf. Zusätzlich zu der durch diesen Antriebsmotor erzielbaren Drehbewegung des Werkzeuges muß dieses häufig, insbesondere wenn es sich um einen Fräser handelt, parallel zu seiner Drehachse verschoben werden. Dies erfordert einen zusätzlichen Motor, der Probleme bei seiner Unterbringung und zusätzliche Kosten nach sich zieht.

Aufgabe der Erfindung ist es, den Revolverkopf so auszugestalten, daß die zusätzliche Anordnung eines für die Parallelverschiebung des Werkzeuges notwendigen Antriebsmotors vermieden wird.

Diese Aufgabe wird bei einem Revolverkopf der im Oberbegriff des Anspruches 1 angegebenen Art erfindungsgemäß dadurch gelöst, daß die Spindel schwenkbar im Revolverkopf gelagert ist und über ein einschaltbares Koppelgetriebe in Abhängigkeit von der Schwenkbewegung des Revolverkopfes durch dessen Antriebsmotor entgegen der Schwenkrichtung desselben verschwenkbar ist.

Aus der EP 0 249 722 ist ein Entgrat-Werkzeug mit einer in sphärischen Lagern gelagerten Werkzeugspindel bekannt, bei der die Werkzeugspindel mit einem konzentrischen Rohr versehen ist, welches in eine mit Druckluft beaufschlagbare Ringnut eintaucht, um eine Einstellbarkeit der Anpreßkraft des Werkzeuges in einem weiten Bereich zu erzielen und damit Unebenheiten der zu bearbeitenden Werkstücke und Werkzeugabnutzungen ausgleichen zu können. Eine Kopplung der Schwenkbewegung der Spindel mit einem Revolverkopf in Abhängigkeit von dessen Schwenkbewegung ist bei dieser bekannten Ausgestaltung jedoch nicht vorgesehen.

Durch die Maßnahme nach Anspruch wird ein zusätzlicher Antriebsmotor für die Parallelverschiebung der Spindel des angetriebenen Werkzeuges vermieden, wodurch die Kosten trotz des Einbaus des einschaltbaren Koppelgetriebes wesentlich gesenkt werden können. Außerdem sind hiermit die häufig weit größeren Probleme des Platzbedarfes ausgeräumt.

Da bei den modernen Werkzeugmaschinen solche Revolverköpfe mit einer NC-Achse ausgestattet sind, kann die Parallelverschiebung durch diese NC-Achse exakt gesteuert werden. Die hierdurch entstehende Axial-Verlagerung des angetriebenen Werkzeuges kann über eine Kreisfunktion durch die X-Achse, also durch den verfahrbaren Schlitten, auf dem der Revolverkopf sitzt, ausgeglichen werden.

Die Steuerung der Parallelverschiebung gestaltet sich dann besonders einfach, wenn in weiterer Ausgestaltung der Erfindung der Schwenkwinkel der Spindel dem Betrage nach dem Schwenkwinkel des Revolverkopfes entspricht.

Eine spezielle besonders bevorzugte konstruktive Ausgestaltung ist dadurch gekennzeichnet, daß die Spindel in einer drehbar im festehenden Revolverkopfgehäuse gelagerten Revolverscheibe drehbar und schwenkbar gelagert ist, daß das Koppelgetriebe einen in der Revolverscheibe drehbar gelagerten Zahnkranz, der mittels eines in die Zahnung des Zahnkranzes einrückbaren, im feststehenden Revolverkopfgehäuse gehaltenen Indexbolzen gegenüber dem Revolverkopf gehäuse festlegbar ist, ein an dem das Werkzeug aufnehmenden Ende gegenüberliegenden Ende der Spindel angeordnetes Zahnkranzsegment sowie ein in der Revolverscheibe drehbar gelagertes Planetenritzel umfaßt, das sowohl in das Zahnkranzsegment als auch in den Zahnkranz eingreift.

Hierdurch ist mit konstruktiv einfachen Mitteln die Schwenkbewegung der Revolverscheibe auf die Spindel, und zwar im entgegengesetzten Schwenksinne übertragbar, ohne daß irgendwelche Platzprobleme für die Anordnung des Koppelgetriebes entstehen würden, da der Zahnkranz, das Planetenritzel und das Zahnsegment bei den üblichen Abmessungen der Revolverscheibe ohne weiteres in dieser untergebracht werden können. Da die erwähnten Teile des Koppelgetriebes einfach herzustellende Maschinenelemente darstellen, ist der Aufwand hierfür in engen Grenzen gehalten.

Der Indexbolzen kann durch eine im Revolverkopfgehäuse angeordnete Zylinder-Kolbeneinheit verschiebbar sein, wofür ebenfalls nur ein geringer Platzbedarf benötigt wird.

Wenn in weiterer Ausgestaltung der Erfindung der Zahnkranz und das Zahnkranzsegment gleich große Teilkreisdurchmesser aufweisen, so ist hierdurch in einfacher Weise sichergestellt, daß der Schwenkwinkel der Spindel dem Betrage nach dem Schwenkwinkel des Revolverkopfes entspricht.

Um eine Taumelbewegung der Spindel bei ihrer Verschwenkung mittels des Koppelgetriebes zu vermeiden, ist das Koppelgetriebe so ausgestaltet, daß die Spindel symmetrisch zu ihrer Achse zwei Zahnkranzsegmente aufweist, daß in der Revolverscheibe zwei Planetenritzel und zwei Zahnkränze drehbar gelagert sind und daß die beiden Zahnkränze mittels einer Ritzelwelle miteinander gekoppelt sind. Hierdurch erfolgt die Krafteinwirkung auf die Spindel völlig symmetrisch, so daß die eingangs erwähnten Taumelbewegungen vermieden sind.

Die Erfindung wird nachstehend anhand eines Ausführungsbeispieles näher erläutert. In der beigefügten Zeichnung zeigen:

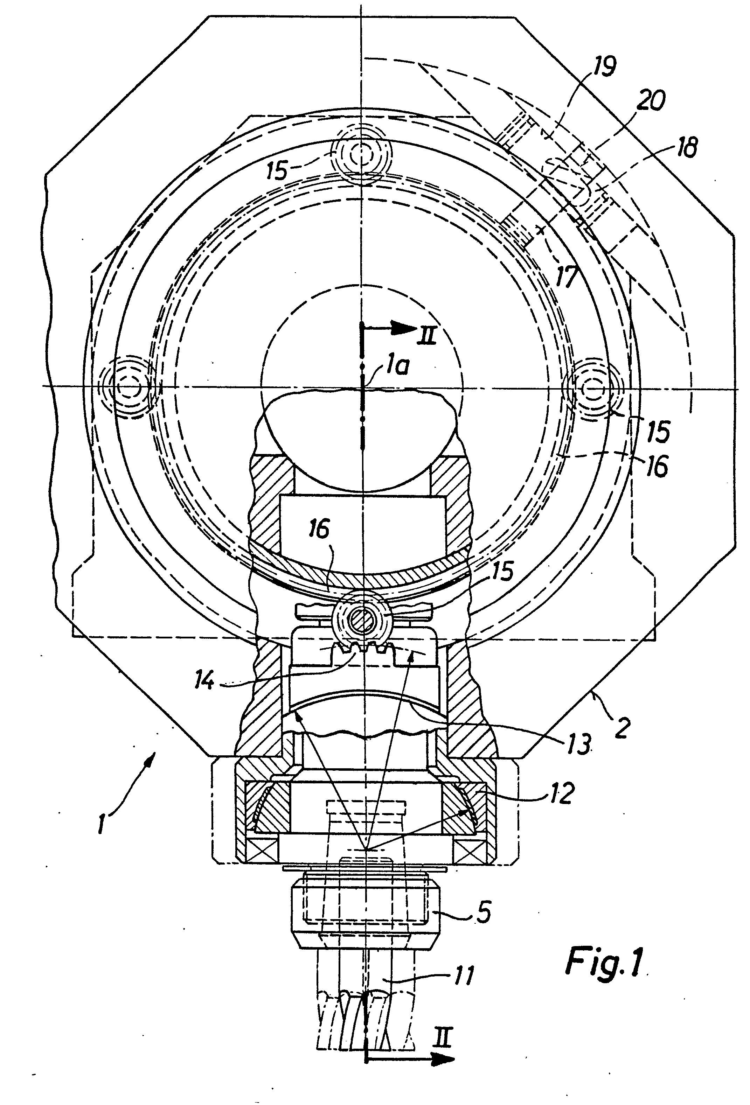

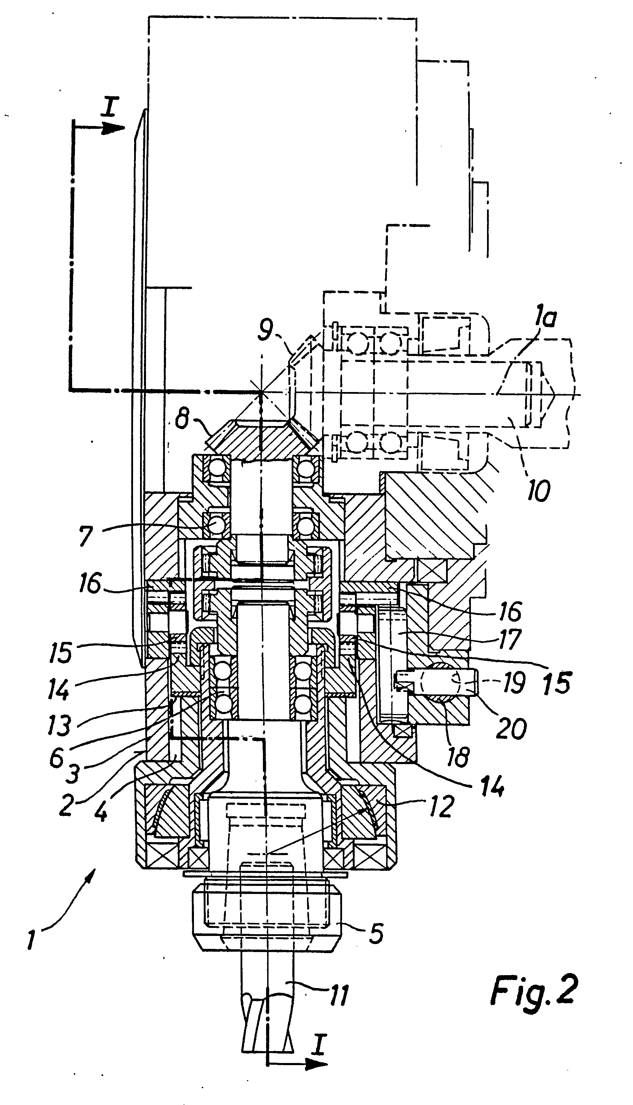

Fig. 1 eine teilweise nach der Linie I-I in Fig. 2 geschnittene Draufsicht auf einen Revolverkopf und

Fig. 2 einen Teilschnitt nach der Linie II-II in Fig. 1.

Ein insgesamt mit 1 bezeichneter Revolverkopf ist mit einer NC-Achse 1a ausgestattet, die eine exakt gesteuerte Schwenkbewegung des Revolverkopfes 1 ermöglicht. Der Revolverkopf 1 weist ein auf einem nicht dargestellten Schlitten verfahrbares Revolverkopfgehäuse 2 auf, in dessen Inneren eine Revolverscheibe 3 drehbar gelagert ist. In einer Aussparung 4 der Revolverscheibe 3 ist eine Spindel 5 mittels Lager 6 und 7 um ihre Achse drehbar gelagert und steht über Kegelradritzel 8 und 9 mit einer Antriebswelle 10 in Verbindung, um ein von der Spindel 5 gehaltenes Werkzeug 11 anzutreiben.

Die Ausnehmung 4 ist so groß gewählt, daß die Spindel 5 in der Ebene der Revolverscheibe Schwenkbewegungen nach beiden Seiten ausgehend von ihrer Radiallage ausführen kann. Zu diesem Zweck ist die Spindel 5 in der Revolverscheibe mittels eines Schräg-Gelenk lagers 12 und einer zylindrischen Gegenlagerschale 13 schwenkbar gelagert.

Die Spindel 5 weist an ihrem innerhalb der Revolverscheibe 3 gelegenen Ende zwei symmetrisch zu ihrer Achse angeordnete Zahnkranzsegmente 14 auf, mit denen jeweils ein Planetenritzel 15 in Eingriff steht, die jeweils in der Revolverscheibe 3 drehbar gelagert sind. Ebenfalls in der Revolverscheibe sind zwei Zahnkränze 16 drehbar gelagert, die über eine nicht dargestellte Ritzelwelle miteinander in Verbindung stehen, wobei diese Zahnkränze 16 konzentrisch zur Achse 1a des Revolverkopfes angeordnet sind. Die Planetenritzel 15 stehen mit diesen Zahnkränzen 16 ebenfalls in Eingriff.

Mit 17 ist ein Indexbolzen bezeichnet, der mittels eines Kolbens einer Zylinder-Kolben-Einheit 19, 18 in Eingriff mit den Zahnkranz 16 bringbar ist, wobei die Zylinder-Kolben-Einheit 19, 18 im wesentlich tangential zur Revolverscheibe angeordnet ist und die Bewegung des Kolbens 18 wird mittels eines Keilgetriebes 20 auf den Indexbolzen übertragen.

Wenn nun beispielsweise zum Rahmenfräsen von Paßfedernuten das Werkzeug 11 parallel zu seiner Achse verschoben werden soll, dann wird zunächst der Zahnkranz 16 mittels des Indexbolzens 17 gegenüber dem Revolverkopfgehäuse 2 festgelegt. Wird nun mittels der NC-Achse 1a die Revolverscheibe 3 gedreht, so wälzt sich das Planetenritzel 15 auf dem Zahnkranz 16 ab und erzeugt somit eine der Drehbewegung der Revolverscheibe 3 entgegengerichtete Schwenkbewegung der Spindel 5 aufgrund des Eingriffs des Planetenritzels 15 sowohl im Zahnkranz 16 als auch im Zahnkranzsegment 14. Da im vorliegenden Beispiel der Teilkreisdurchmesser des Zahnkranzes 16 und derjenige des Zahnkranzsegmentes 14 übereinstimmen, entspricht der Schwenkwinkel der Spindel 5 dem Dreh- bzw. Schwenkwinkel der Revolverscheibe 3 dem Betrage nach. Hierdurch wird bei einer Verschwenkung der Revolverscheibe die Spindel 5 und damit das Werkzeug 11 exakt parallel zu ihrer Achse verschoben. Die hierdurch entstehende Axial- Verlagerung des Werkzeuges 11 kann mittels des den Revolverkopf 1 tragenden Schlitten wieder ausgeglichen werden.

Die symmetrische Anordnung der Zahnsegmente 14 der Planetenritzel 15 und der Zahnkränze 16 ist vorgesehen, um bei einer Verschiebung der Spindel 5 eine Taumelbewegung derselben zu vermeiden.

Zum Weitertakten der Revolverscheibe 3 in andere Werkzeugstationen wird der Zahnkranz 16 über den Indexbolzen 17 entriegelt, so daß das gesamte Koppelgetriebe, welches aus den Zahnkränzen 16, den Planetenritzeln 15 und den Zahnkranzsegmenten 14 besteht, außer Funktion gesetzt und mit dem Revolverkopf mitgedreht wird.

## Ansprüche

1. Revolverkopf mit einer angetriebenen ein Werkzeug aufnehmenden Spindel der in verschiedene Werkzeugstationen um eine zentrale Achse mittels eines Antriebsmotors schwenkbar und in diesen Werkzeugstationen feststellbar ist sowie mit einem ihn tragenden verschiebbaren Schlitten, der eine Zustellung des angetriebenen Werkzeuges in Richtung der Achse der das Werkzeug aufnehmenden Spindel ermöglicht, **dadurch gekennzeichnet,** daß die Spindel (5) schwenkbar im Revolverkopf gelagert ist und über ein einschaltbares Koppelgetriebe (14, 15, 16) in Abhängigkeit von der Schwenkbewegung des Revolverkopfes (1) durch dessen Antriebsmotor entgegen der Schwenkrichtung desselben verschwenkbar ist.

2. Revolverkopf nach Anspruch 1, **dadurch gekennzeichnet**, daß der Schwenkwinkel der Spindel (5) dem Betrage nach dem Schwenkwinkel des Revolverkopfes (1) entspricht.

3. Revolverkopf nach Anspruch 1 oder 2, dadurch **gekenn zeichnet**, daß die Spindel (5) in einer drehbar im feststehenden Revolverkopfgehäuse (2) gelagerten Revolverscheibe (3) drehbar und schwenkbar gelagert ist und daß das Koppelgetriebe (14, 15, 16) einen in der Revolverscheibe (3) drehbar gelagerten Zahnkranz (16), der mittels eines in die Zahnung des Zahnkranzes einrückbaren im feststehenden Revolverkopfgehäuse (2) gehaltenen Indexbolzen (17) gegenüber dem Revolverkopfgehäuse (2) festlegbar ist, ein an dem das Werkzeug (11) aufnehmenden Ende gegenüberliegenden Ende der Spindel (5) angeordnetes Zahnkranzsegment (14) sowie ein in der Revolverscheibe (3) drehbar gelagertes Planetenritzel (15) umfaßt, daß sowohl in das Zahnkranzsegment (14) also auch in den Zahnkranz (16) eingreift.

4. Revolverkopf nach Anspruch 3, dadurch **gekennzeichnet**, daß der Indexbolzen (17) durch eine im Revolverkopfgehäuse (2) angeordnete Zylinder-Kolben-Einheit (19, 18) verschiebbar ist.

5. Revolverkopf nach Anspruch 3 oder 4, dadurch **gekennzeichnet**, daß der Zahnkranz (16) und das Zahnkranzsegment (14) gleich große Teilkreisdurchmesser aufweisen.

6. Revolverkopf nach einem der Ansprüche 3 bis 5, dadurch **gekennzeichnet**, daß die Spindel (5) symmetrisch zu ihrer Achse zwei Zahnkranzsegmente (14) aufweist, daß in der Revolverscheibe 83) zwei Planetenritzel (15) und zwei Zahnkränze (16) dreh bar gelagert sind und daß die beiden Zahnkränze mittels einer Ritzelwelle miteinander gekoppelt sind.

EP 0 331 053 A2

Fig.1

*Fig.2*